# EUROPÄISCHE PATENTSCHRIFT

(11) **EP 2 106 285 B1**
(45) Veröffentlichungstag und Bekanntmachung des Hinweises auf die Patenterteilung: **28.09.2011**
(21) Anmeldenummer: 07857008.2
(22) Anmeldetag: 20.12.2007
(51) Int. Cl.: B01D 53/94, B01D 53/90, F01N 3/20, F01N 3/10

(54) **VERFAHREN ZUR SELEKTIVEN KATALYTISCHEN REDUKTION VON STIKOXIDEN IN ABGASEN VON FAHRZEUGEN**
METHOD FOR THE SELECTIVE CATALYTIC REDUCTION OF NITROGEN OXIDES IN EXHAUST GASES OF VEHICLES
PROCÉDÉ DE RÉDUCTION CATALYTIQUE SÉLECTIVE D'OXYDES D'AZOTE DANS LES GAZ D'ÉCHAPPEMENT DE VÉHICULES À MOTEUR

(30) Priorität: 23.12.2006 DE 102006061377
(43) Veröffentlichungstag der Anmeldung: 07.10.2009
(73) Patentinhaber: AlzChem Trostberg GmbH, 83308 Trostberg (DE)
(72) Erfinder: HAMMER, Benedikt, 83342 Tacherting (DE); KRIMMER, Hans-Peter, 84558 Kirchweidach (DE); SCHULZ, Bernd, 84478 Waldkraiburg (DE); JACOB, Eberhard, 82152 Krailling (DE)
(74) Vertreter: Dey, Michael
(86) Internationale Anmeldenummer: PCT/EP2007/011285
(87) Internationale Veröffentlichungsnummer: WO 2008/077588

(56) Entgegenhaltungen:
- WO-A-02/43837
- WO-A-2006/040842
- DE-A1- 4 221 451
- US-A- 4 961 917
- US-A- 5 809 775
- US-A1- 2004 128 982
- US-B1- 6 266 955

## Beschreibung

Die vorliegende Erfindung betrifft ein Verfahren zur selektiven katalytischen Reduktion von Stickoxiden in Abgasen von Fahrzeugen mit Hilfe von Guanidinsalz-Lösungen, wobei aus den entsprechenden Guanidinsalzen durch Verdampfung und katalytische Zersetzung Ammoniak erzeugt wird und dieses als Reduktionsmittel für die anschließende selektive katalytische Reduktion der Stickoxide dient.

Gemäß dem Stand der Technik dient Ammoniak (NH₃) bei der selektiven katalytischen Reduktion von Stickoxiden in sauerstoffhaltigen Abgasen von Fahrzeugen als Reduktionsmittel, das vor einem speziellen SCR-Katalysator oder vor einer in einem Schalldämpfer integrierten Gruppe von parallel durchströmbaren SCR-Katalysatormodulen in die Abgasleitung von Verbrennungsanlagen und -kraftmaschinen, insbesondere die von Verbrennungskraftmaschinen von Fahrzeugen, eingeleitet wird und in den SCR-Katalysatoren die Reduktion der im Abgas enthaltenen Stickoxide bewirkt. SCR bedeutet Selective Catalytic Reduction von Stickoxiden (NOₓ) in Gegenwart von Sauerstoff.

Für die Erzeugung von Ammoniak, speziell in Fahrzeugen, sind bisher verschiedene flüssige und feste Ammoniakvorläufersubstanzen bekannt geworden, die nachfolgend näher beschrieben werden.

Bei Nutzfahrzeugen hat sich die Verwendung einer wässrigen, eutektischen Lösung von Harnstoff in Wasser (AdBlue^{™}) mit einem Gehalt von 32,5 Gew.-% Harnstoff, einem Gefrierpunkt von -11 °C und einem Ammoniakbildungspotential von 0,2 kg/kg als Ammoniakvorläufersubstanz durchgesetzt. Zum Betrieb der SCR-Anlage bei Temperaturen bis -30 °C, d. h. bis zum Cold Flow Plugging Point (CFPP, untere Betriebstemperatur) des Dieselkraftstoffs in Winterqualität ist eine vergleichsweise aufwendige und gegen Betriebsstörungen anfällige Zusatzheizung von Tank, Leitungen und Ventilen für den AdBlue-Einsatz und für die AdBlue-Logistik in kalten Klimata im Winter erforderlich.

Das für die katalytische Reduktion des NOₓ erforderliche Ammoniak wird bei der thermischen Zersetzung des Harnstoffs gebildet. Hierfür sind folgende Reaktionen relevant: Harnstoff lässt sich nicht verdampfen, sondern zerfällt beim Erhitzen primär in Isocyansäure (HNCO) und Ammoniak (NH₃) gemäß Gleichung [1].

(H₂N_{α})₂CO → HNCO + NH₃ [1]

Die Isocyansäure kann leicht zu nichtflüchtigen Stoffen, wie Cyanursäure polymerisieren. Hierbei können betriebsstörende Ablagerungen an Ventilen, an Einspritzdüsen und im Abgasrohr entstehen.

Die Isocyansäure (HNCO) wird in Anwesenheit von Wasser (H₂O) zu Ammoniak (NH₃) und Kohlendioxid (CO₂) gemäß Gleichung [2] hydrolysiert.

HNCO + H₂O → NH₃ + CO₂ [2].

Die Reaktion [2] erfolgt in der Gasphase sehr langsam. Sie verläuft dagegen sehr schnell an Metalloxid- und/oder Zeolithkatalysatoren, etwas langsamer an den durch ihren WO₃-Gehalt stark sauren Metalloxidkatalysatoren, wie den SCR-Katalysatoren auf Basis eines Mischoxids aus Vanadiumoxid, Wolframoxid und Titanoxid.

Bei den in Verbindung mit Kraftfahrzeugen bekannten Anwendungen von Harnstoff-SCR-Katalysatorsystemen wird in der Regel das Motorabgas unter Ausnutzung von dessen Wärmeinhalt zur thermischen Zersetzung des Harnstoffs nach Reaktion [1] genutzt. Prinzipiell kann die Reaktion [1] bereits vor dem SCR-Katalysator ablaufen, während die Reaktion [2] katalytisch beschleunigt werden muss. Prinzipiell können die Reaktionen [1] und [2] auch am SCR-Katalysator ablaufen, dessen SCR-Aktivität dadurch vermindert wird.

Für Länder in einem kalten Klima ist es vorteilhaft, eine einfriersichere Ammoniakvorläufersubstanz verwenden zu können. Durch Zusatz von Ammoniumformiat zur Lösung von Harnstoff in Wasser kann der Gefrierpunkt deutlich abgesenkt werden. Damit werden Zusatzheizungen überflüssig und bei den Herstell- und Logistikkosten erhebliche Ersparnisse erzielt. Eine Lösung von 26,2 % Ammoniumformiat und 20,1 % Harnstoff in Wasser besitzt einen Gefrierpunkt von -30 °C und ist kommerziell unter der Bezeichnung Denoxium-30 verfügbar und kann vorteilhaft in der kalten Jahreszeit das AdBlue^{™} ersetzen (SAE technical papers 2005-01-1856).

Durch den Zusatz von Ammoniumformiat zur Lösung von Harnstoff in Wasser kann bei einer Lösung von 35 % Ammoniumformiat und 30 % Harnstoff in Wasser das Ammoniakbildungspotential von 0,2 kg/kg auf 0,3 kg/kg erhöht werden. Damit wird die Reichweite des Fahrzeugs mit einer Füllung der Ammoniakvorläufersubstanz um ein Drittel erhöht und bei Personenkraftwagen generell die Möglichkeit einer Dauerfülllung zwischen den Inspektionsintervallen erhöht. Ein Nachteil dieser Maßnahme ist das Ansteigen des Gefrierpunkts der Lösung auf den Bereich von -11 bis -15 °C (Denoxium January 2005, www.kemira.com).

In der EP 487 886 A1 wird ein Verfahren für die quantitative Zersetzung einer wässrigen Lösung von Harnstoff in Wasser durch Hydrolyse zu Ammoniak (NH₃) und Kohlendioxid (CO₂) in einem Temperaturbereich von 160 bis 550 °C vorgeschlagen, bei der im Ergebnis die Bildung unerwünschter Isocyansäure und von deren fester Folgeprodukte vermieden wird. Bei dieser bekannten Methode wird die Harnstofflösung zunächst mittels einer Düse auf einen im oder außerhalb des Abgases befindlichen Verdampfer/Katalysator gesprüht. Die dabei entstehenden gasförmigen Produkte werden zur Nachbehandlung über einen Hydrolysekatalysator geleitet, um eine quantitative Bildung von Ammoniak zu erreichen.

Aus der EP 555 746 A1 ist eine Methode bekannt, wobei der Verdampfer aufgrund seiner Ausgestaltung die Harnstofflösung homogen so verteilt, dass der Kontakt der Tröpfchen mit den Kanalwandungen des Zersetzungskatalysators sichergestellt ist. Durch eine homogene Verteilung werden Ablagerungen auf den Katalysatoren vermieden und der Schlupf von überschüssigem Reduktionsmittel vermindert. Die Harnstoffdosierung sollte nur bei Abgastemperaturen ab 160 °C aktiviert werden, da beim Unterschreiten dieser Temperatur unerwünschte Ablagerungen gebildet werden.

Die Überführung von Ammoniumformiat als Ammoniakvoräufersubstanz in Ammoniak ist durch Eindüsen der wässrigen Lösung in das heiße Abgas durch einfache Sublimation ohne besondere Vorbehandlung möglich. Nachteilig ist eine gleichzeitige Freisetzung der sehr korrosiven Ameisensäure und die mögliche Rückbildung von Ammoniumformiat auf der Oberfläche des SCR-Katalysators bei Abgastemperaturen unter 250 °C. Das Porensystem des SCR-Katalysators wird temperaturreversibel verstopft.

WO02/43837 A1, DE4221451 A1, US2004/0128982 A1, US5809775 und US6266955 B1 offenbaren ebenfalls Verfahren zur selektiven katalytischen Reduktion von Stickoxiden.

Der vorliegenden Erfindung lag daher die Aufgabe zugrunde, ein Verfahren zur selektiven katalytischen Reduktion von Stickoxiden mit Ammoniak in Abgasen von Fahrzeugen zu entwickeln, welches die genannten Nachteile entsprechend dem Stand der Technik nicht aufweist, sondern wobei eine technisch einfache Erzeugung von Ammoniak für die NOₓ-Verminderung nach dem SCR-Verfahren ermöglicht wird und keine unerwünschten Nebenprodukte bei der Zersetzung gebildet werden.

Diese Aufgabe wurde erfindungsgemäß dadurch gelöst, dass man Lösungen von Guanidinsalzen mit einem Ammoniak-Bildungspotential von 80 bis 850 g/kg, in Gegenwart von katalytisch aktiven, nicht oxidationsaktiven Beschichtungen aus Oxiden, ausgewählt aus der Gruppe Titandioxid, Aluminiumoxid, Siliciumdioxid sowie hydrothermal stabilen Metallzeolithen bzw. deren Mischungen katalytisch zersetzt. Erfindungsgemäß bevorzugt werden die Lösungen von Guanidinsalzen ggf. in Kombination mit Harnstoff und/oder Ammoniak und/oder Ammoniumsalzen eingesetzt.

Das entstehende Ammoniak-haltige Gas wird dem Abgas des Fahrzeugs stromaufwärts eines SCR-Katalysators zugeführt.

Es hat sich nämlich überraschenderweise gezeigt, dass mit Hilfe des erfindungsgemäßen Verfahrens eine Reduktion der Stickoxide in Fahrzeugabgasen um ca. 90 % erzielt werden kann. Außerdem ist mit den erfindungsgemäß vorgeschlagenen Guanidinsalzen eine Erhöhung des Ammoniak-Bildungspotentials von 0,2 kg entsprechend dem Stand der Technik bis auf 0,4 kg Ammoniak pro Liter Guanidinsalz bei gleichzeitiger Winterfestigkeit (Gefrierpunkt unter -25 °C) möglich.

Zur selektiven katalytischen Reduktion von Stickoxiden mit Ammoniak in ggf. sauerstoffhaltigen Abgasen von Fahrzeugen werden erfindungsgemäß Guanidinsalze eingesetzt, die ein Ammoniak-Bildungspotential 80 bis 850 g/kg und besonders bevorzugt 250 bis 600 g/kg, aufweisen. Als erfindunsgemäß sind hierbei Guanidinsalze der allgemeinen Formel (I) 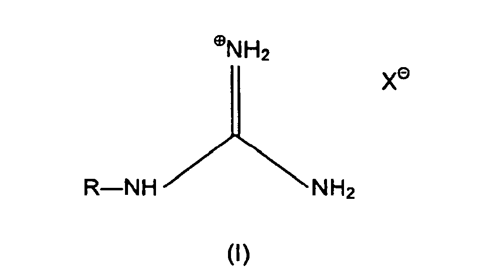 anzusehen,
wobei
R = H, NH₂, C₁-C₁₂-Alkyl,
X^{⊝} = Acetat, Cyanat, Formiat, Hydroxyd. Methylat und Oxalat, bedeuten.

Es ist im Rahmen der vorliegenden Erfindung ohne Weiteres möglich, eine Mischung aus zwei oder mehreren unterschiedlichen Guanidinsalzen zu verwenden. Erfindungsgemäß bevorzugt werden Lösungen von Guanidinsalzen eingesetzt, die einen Gehalt an Guanidinsalzen von 5 bis 85 Gew.-%, insbesondere 30 bis 80 Gew.-% und bevorzugt 5 bis 60 Gew.-% aufweisen. Gemäß einer bevorzugten Ausführungsform werden die erfindungsgemäß eingesetzten Guanidinsalze mit Harnstoff und/oder Ammoniak und/oder Ammoniumsalzen kombiniert. Die Mischungsverhältnisse von Guanidinsalz mit Harnstoff sowie Ammoniak bzw. Ammoniumsalzen kann in weiten Grenzen variiert werden, es hat sich jedoch als besonders vorteilhaft erwiesen, dass die Mischung von Guanidinsalz und Harnstoff einen Guanidinsalz-Gehalt von 5 bis 60 Gew.-% und einen Hamstoff-Gehalt von 5 bis 35 Gew.-%, insbesondere 10 bis 30 Gew.-% besitzt. Des Weiteren sind Mischungen von Guanidinsalzen und Ammoniak bzw. Ammoniumsalzen mit einen Gehalt an Guanidinsalz von 5 bis 60 Gew.-% und von Ammoniak bzw. Ammoniumsalz von 5 bis 40 Gew.-%, insbesondere 10 bis 35 Gew.-% als bevorzugt anzusehen.

Als Ammoniumsalze haben sich hierbei vor allem Verbindungen der allgemeinen Formel (II) bewährt

R-NH₃^{⊕} X^{Θ} (II)

wobei
R = H, NH₂, C₁-C₁₂-Alkyl,
X^{Θ} = Acetat, Carbonat, Cyanat, Formiat, Hydroxid, Methylat und Oxalat bedeuten.

Die erfindungsgemäß eingesetzten Guanidinsalze sowie ggf. die weiteren Komponenten, bestehend aus Harnstoff bzw. Ammoniumsalzen kommen in Form einer Lösung zum Einsatz, wobei als Lösemittel vor allem Wasser und/oder ein C₁-C₄-Alkohol bevorzugt eingesetzt werden. Die wässrigen und/oder alkoholischen Lösungen weisen hierbei einen bevorzugten Feststoffgehalt von 5 bis 85 Gew.-%, insbesondere 30 bis 80 Gew.%, auf. Die Lösung des Guanidinsalzes oder der Gemische von Guanidinsalzen ggf. auch in Kombination mit Harnstoff in Wasser besitzen hierbei ein bevorzugtes Ammoniak-Bildungspotential von 0,2 bis 0,5 kg Ammoniak pro Liter Lösung, insbesondere 0,25 bis 0,35 kg Ammoniak pro Liter Lösung.

Es ist als erfindungswesentlich anzusehen, dass die Guanidinsalze sowie ggf. die weiteren Komponenten einer katalytischen Zersetzung zu Ammoniak im bevorzugten Temperaturbereich von 150 bis 350 °C unterzogen werden, wobei als weitere Komponenten Kohlendioxid sowie ggf. Kohlenmonoxid gebildet werden. Diese Zersetzung der Guanidinsalze zu Ammoniak wird hierbei in Gegenwart von katalytisch aktiven, nicht oxidationsaktiven Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, insbesondere Eisenzeolithen vom ZSM 5 oder BEA-Typ, vorgenommen. Als Metalle kommen hierbei insbesondere die Nebengruppen-Elemente und vorzugsweise Eisen oder Kupfer in Frage. Das entsprechende Fe-Zeolith-Material wird nach bekannten Methoden wie z. B. der solid-state-exchange-Methode bspw. mit FeCl₂ hergestellt, anschließend in Form einer Slurry auf das Substrat (wie z. B. Cordierit-Monolith) aufgebracht, getrocknet bzw. bei höheren Temperaturen (ca. 500 °C) calciniert.

Die Metalloxide wie Titanoxid, Aluminiumoxid und Siliciumdioxid sowie deren Mischungen werden vorzugsweise auf metallischen Trägermaterialien wie z. B. Heizleiter-Legierungen (insbesondere Chrom-Aluminium-Stähle) aufgebracht.

Vorzugsweise kann die katalytische Zersetzung der Guanidinsalze bzw. der übrigen Komponenten auch zu Ammoniak und Kohlendioxid und ggf. Kohlenmonoxid erfolgen, wobei neben einem Katalysator mit nicht oxidationsaktiven Beschichtungen noch ein Katalysator mit oxidationsaktiven Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, eingesetzt wird, wobei die Beschichtungen mit Gold und/oder Palladium als oxidationsaktive Komponenten imprägniert sind. Die entsprechenden Katalysatoren mit Palladium und/oder Gold als Aktivkomponenten weisen vorzugsweise ein Edelmetallgehalt von 0,001 bis 2 Gew.-% auf. Mit Hilfe derartiger Oxidationskatalysatoren ist es möglich, die unerwünschte Bildung von Kohlenmonoxid als Nebenprodukt bei der Zersetzung der Guanidinsalze bereits bei der Ammoniakerzeugung zu vermeiden.

Bevorzugt wird für die katalytische Zersetzung der Guanidinsalze sowie ggf. der weiteren Komponenten eine katalytische Beschichtung mit Palladium oder/und Gold als Aktivkomponenten mit einem Edelmetallgehalt von 0,001 bis 2 Gew.-%, insbesondere 0,01 bis 1 Gew.-% eingesetzt.

Es ist im Rahmen der vorliegenden Erfindung möglich, dass man einen Katalysator, bestehend aus zwei Abschnitten einsetzt, wobei der erste Abschnitt nicht oxidationsaktive Beschichtungen und der zweite Abschnitt oxidationsaktive Beschichtungen enthält. Vorzugsweise bestehen 5 bis 90 Vol.-% dieses Katalysators aus nicht oxidationsaktiven Beschichtungen und 10 bis 95 Vol-% aus oxidationsaktiven Beschichtungen. Alternativ kann man die katalytische Zersetzung auch in Gegenwart von zwei hintereinander angeordneten Katalysatoren durchführen, wobei der erste Katalysator nicht oxidationsaktive Beschichtungen und der zweite Katalysator oxidationsaktive Beschichtungen enthält.

Die katalytische Zersetzung der erfindungsgemäß eingesetzten Guanidinsalze sowie ggf. den weiteren Komponenten zu Ammoniak kann abgasintem im Teil- oder Nebenstrom oder abgasextem in einer autobaren und fremdgeheizten Anordnung der Fahrzeugabgase vorgenommen werden.

Mit Hilfe der erfindungsgemäß vorgeschlagenen Guanidinsalze ist es möglich, eine Reduktion der Stickoxide in Abgasen von Fahrzeugen um ca. 90 % zu erzielen. Schließlich ist auch die Korrosionsgefahr der erfindungsgemäß eingesetzten Guanidinsalz-Lösungen im Vergleich zu Lösungen mit Ammoniumformiat deutlich verringert.

Die nachfolgenden Beispiele sollen die Erfindung näher erläutern.

### Beispiele

### Beispiel 1

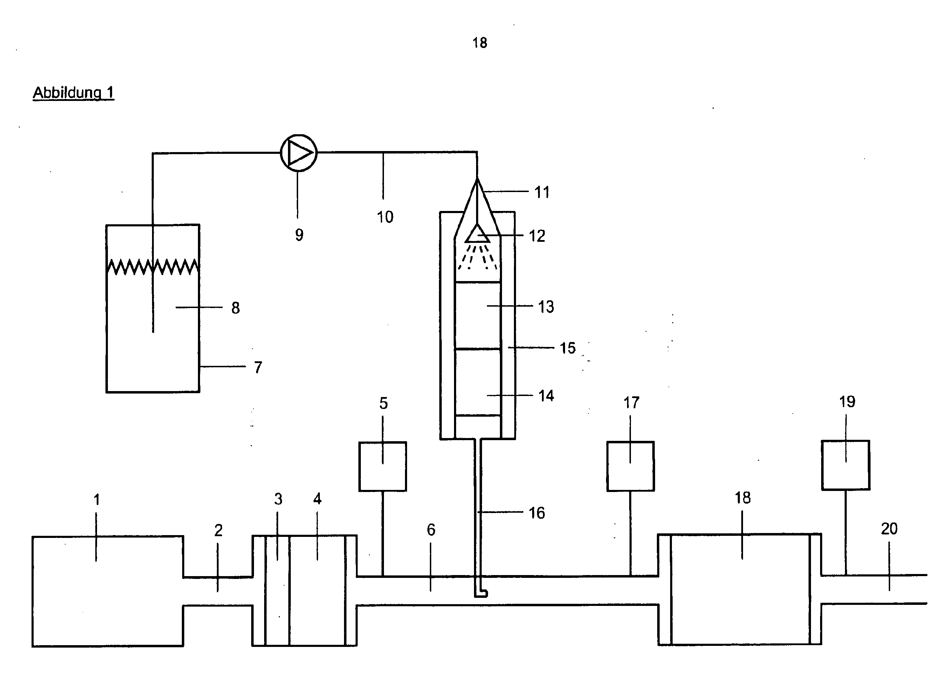

### Verwendung einer wässrigen, 40 Gew.-%igen Guanidiniumformiat-Lösung, (GF) (Fp. < -20 °C) als Ammoniakvorläufersubstanz im autobaren Ammoniakgenerator entsprechend der Beschreibung gemäß Abbildung 1

Ein Pkw-Motor 1 erzeugt einen Abgasstrom von 200 Nm³/h, der über das Zwischenrohr 2 über einen Platinoxidationskatalysator 3 und einen Partikelfilter 4 in das Abgaszwischenrohr 6 geleitet wird. Die mit dem FTIR-Gasanalysator 5 gemessene Abgaszusammensetzung im Zwischenrohr 6 ist: 150 ppm Stickoxid, NO; 150 ppm Stickstoffdioxid, NO₂ 7 % Kohlendioxid, CO₂; 8 % Wasserdampf, 10 ppm Kohlenmonoxid, CO.

In einem Tankbehälter 7 befindet sich eine GF-Lösung 8, die mittels einer Dosierpumpe 9 über eine Zuführleitung 10 und einer Düse 12 in einen Reaktor 11 eingesprüht wird. Der Reaktor 11 besteht aus einem auf 250 °C beheizten, vertikal angeordneten Rohr mit Innendurchmesser 51 mm aus austenitischem Edelstahl und besitzt einen Heizmantel 15. Im Reaktor 11 befinden sich die Katalysatoren 13 und 14. Die Katalysatoren sind mit Titandioxid von der Fa. Südchemie AG, D-Heufeld beschichtete Metallträger, Durchmesser 50 mm, Länge 200 mm; Hersteller der Metallträger: Emitec GmbH, D-53797 Lohmar. Der Katalysator 13 basiert auf einem grobzelligen Trägertyp MX/PE 40 cpsi, 100 mm lang. Stromabwärts besteht der Katalysator 14 aus dem feinzelligen Trägertyp MX/PE 200 cpsi, 100 mm lang. Die Stirnfläche des grobzelligen Katalysators 13 wird aus einer Düse 12 mittels Druckdosierpumpe 9 mit einer GF-Lösung 8 besprüht. Die Düse 12 ist im Reaktor 11 axial und stromaufwärts des grobzelligen Katalysators 13 angeordnet. Am Katalysator 13 wird der Wasseranteil der GF-Lösung 8 verdampft und an den Katalysatoren 13 und 14 wird das GF thermohydrolytisch so zersetzt, dass die Bildung der Zwischenprodukte Harnstoff und Isocyansäure, HNCO vermieden wird.

Das entstehende Gemisch aus Ammoniak, Kohlendioxid, Kohlenmonoxid und Wasserdampf wird über das Zuleitungsrohr 16 in das Abgaszwischenrohr 6 stromaufwärts eines SCR-Katalysators 18 bei 300 °C in das mit dem Katalysator 3 und dem Filter 4 vorbehandelte Abgas (200 Nm³/h) des Pkw-Motors 1 eingeleitet. Die Dosierung der GF-Lösung 8 wird so mit der Druckdosierpumpe 9 reguliert, dass mit dem FTIR-Gasanalysator 17 eine Ammoniakkonzentration von 270 ppm gemessen werden kann. Hierbei erfolgt gleichzeitig ein Anstieg der CO-Konzentration um 90 auf 100 ppm durch die Zersetzung des Formiatanteils der GF-Lösung 8. Der Anstieg des CO₂- und Wasserdampfgehalts durch die Verdampfung und Zersetzung von der GF-Lösung 8 ist erwartungsgemäß gering und fast nicht messbar. Die katalytische Hydrolyse des GF ist vollständig, da mit dem Gasanalysator 17 keine Isocyansäure, HNCO detektiert werden kann und keine Ablagerungen von Harnstoff und dessen Zersetzungsprodukten festgestellt werden können.

Stromabwärts des SCR-Katalysators 18 wird mit dem FTIR-Gasanalysator 19 eine Reduktion der Konzentration von NO und NO₂ um 90 % auf 30 ppm gemessen. Hierbei erfolgt eine vollständige Umsetzung des Ammoniaks, NH₃ mit NO und NO₂ zu Stickstoff, N₂. Die Konzentration des Ammoniaks nach SCR-Katalysator 19 ist < 2 ppm.

Die FTIR-Gasanalysatoren 5, 17 und 19 ermöglichen eine simultane Abgasanalyse der Komponenten NO, NO₂, CO, CO₂, H₂O, Ammoniak, NH₃ und Isocyansäure, HNCO.

### Beispiel 2

Es wird analog Beispiel 1 gearbeitet, der Titandioxid-Katalysator 14 wird jedoch durch einen Palladiumoxid-Titandioxid-Katalysator ersetzt, wobei das Titandioxid mit einer wässrigen Pd(NO₃)₂-Lösung so imprägniert wurde, dass nach der Trocknung und Calcinierung (5 Stunden bei 500 °C) ein Katalysator entsteht, der 1 Gew.-% PdO (= ca. 0,9 Gew.-% Pd) enthält, der eine partielle Oxydation des Kohlenmonoxid bewirkt. Am FTIR-Gasanalysator 17 ist kein Anstieg der CO-Konzentration messbar.

### Beispiel 3 (nicht erfindungsgemäß)

Es wird analog Beispiel 1 gearbeitet, doch anstelle der 40 Gew.-%igen Guandiniumformiat-Lösung wird eine 15 Gew.-%ige Di-Guanidiniumcarbonat-Lösung eingesetzt. Der Reaktor 11 wird ebenfalls bei 250 °C beheizt, die Katalysatoren 13 und 14 sind identisch mit denen von Beispiel 1.

Am Gasanalysator 17 wird kein Nebenprodukt detektiert (< 1 ppm), der CO₂-Anstieg entspricht mit rund 40 ppm der Erwartung; beim Gasanalysator 19 ist eine Reduktion der Konzentration von NO und NO₂ um rund 92 % auf 25 ppm nachweisbar.

### Beispiel 4

Es wird analog Beispiel 1 gearbeitet, jedoch bestehen die Katalysatoren 13 und 14 aus Al₂O₃ und der Reaktor 11 wird bei einer Temperatur von 350 °C betrieben.

Im Gasanalysator 17 werden als Nebenprodukte nur CO (80 ppm) und HCN (< 10 ppm) gemessen; nach dem SCR-Katalysator werden am Gasanalysator 19 eine Reduktion des NO und NO₂ um 85 % auf 45 ppm sowohl kein HCN gemessen.

## Patentansprüche

1. Verfahren zur selektiven katalytischen Reduktion von Stickoxiden mit Ammoniak in Abgasen von Fahrzeugen, **dadurch gekennzeichnet, dass** man Lösungen von Guanidinsalzen mit einem Ammoniak-Bildungspotential von 80 bis 850 g/kg ggf. in Kombination mit Harnstoff und/oder Ammoniak und/oder Ammoniumsalzen in Gegenwart von katalytisch aktiven, nicht oxidationsaktiven Beschichtungen aus Oxiden, ausgewählt aus der Gruppe Titandioxid, Aluminiumoxid, Siliciumdioxid und deren Mischungen oder/und hydrothermal stabilen Zeolithen, die vollständig oder teilweise metallausgetauscht sind, katalytisch zersetzt und das entstehende Ammoniak-haltige Gas dem Abgas des Fahrzeugs stromaufwärts eines SCR-Katalysators zuführt, wobei Guanidinsalze der allgemeinen Formel (I) 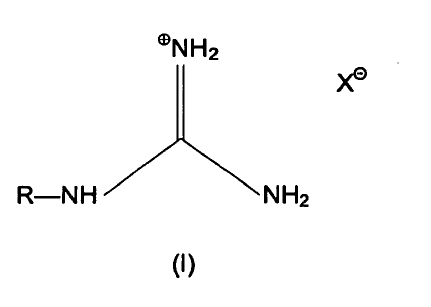 eingesetzt werden,
wobei
R = H, NH₂, C₁-C₁₂-Alkyl,
x^{Θ} = Acetat, Cyanat, Formiat, Hydroxid, Methylat und Oxalat, bedeuten.

2. Verfahren nach Anspruch 1, **dadurch gekennzeichnet, dass** eine Mischung aus zwei oder mehreren unterschiedlichen Guanidinsalzen eingesetzt wird.

3. Verfahren nach einem der Ansprüche 1 bis 2,
**dadurch gekennzeichnet,**
**dass** das Guanidinsalz ein Ammoniak-Bildungspotenzial von 250 bis 600 g/kg besitzt.

4. Verfahren nach einem der Ansprüche 1 bis 3,
**dadurch gekennzeichnet,**
**dass** die Mischung von Guanidinsalz und Harnstoff einen Guanidinsalz-Gehalt von 5 bis 60 Gew.-% und einen Harnstoff-Gehalt von 5 bis 35 Gew.-% aufweist oder dass die Mischung von Guanidinsalz und Ammoniak bzw. Ammoniumsalzen einen Gehalt an Guanidinsalz von 5 bis 60 Gew.-% und von Ammoniak bzw. Ammoniumsalz 5 bis 40 Gew.-% besitzt.

5. Verfahren nach einem der Ansprüche 1 bis 4,
**dadurch gekennzeichnet,**
**dass** die Ammoniumsalze aus Verbindungen der allgemeinen Formel (II) bestehen
R-N H₃^{⊕} X^{Θ} (II)
wobei
R = H, NH₂, C₁-C₁₂-Alkyl,
x^{Θ} = Acetat, Carbonat, Cyanat, Formiat, Hydroxid, Methylat
und Oxalat
bedeuten.

6. Verfahren nach einem der Ansprüche 1 bis 5,
**dadurch gekennzeichnet,**
**dass** das Guanidinsalz sowie ggf. die weiteren Komponenten in einem Lösemittel bestehend aus Wasser und/oder einem C₁-C₄-Alkohol eingesetzt werden.

7. Verfahren nach dem Anspruch 6,
**dadurch gekennzeichnet,**
**dass** die wässrige und/oder alkoholische Lösung einen Feststoffgehalt von 5 bis 85 Gew.%, insbesondere 30 bis 80 Gew.-%, aufweist.

8. Verfahren nach einem der Ansprüche 1 bis 7,
**dadurch gekennzeichnet,**
**dass** die Lösung des Guanidinsalzes oder der Gemische von Guanidinsalzen ggf. auch im Gemisch mit Harnstoff in Wasser ein Ammoniakbildungspotential von 0,2 bis 0,5 kg Ammoniak pro Liter Lösung, insbesondere von 0,25 bis 0,35 kg/l besitzt.

9. Verfahren nach einem der Ansprüche 1 bis 8,
**dadurch gekennzeichnet,**
**dass** das Guanidinsalz sowie ggf. die weiteren Komponenten abgasintern im Teil- oder Nebenstrom der Fahrzeug-Abgase oder abgasextern in einer autobaren und fremdgeheizten Anordnung durch katalytische Zersetzung in Ammoniak umgewandelt wird.

10. Verfahren nach einem der Ansprüche 1 bis 9,
**dadurch gekennzeichnet,**
**dass** man für die katalytische Zersetzung des Guanidinsalzes sowie ggf. der weiteren Komponenten zu Ammoniak, Kohlendioxid und ggf. Kohlenmonoxid neben einem Katalysator mit nicht oxidationsaktiven Beschichtungen noch einen Katalysator mit oxidationsaktiven Beschichtungen einsetzt, bevorzugt einen Katalysator mit oxidationsaktiven Beschichtungen aus Oxiden, ausgewählt aus der Gruppe Titandioxid, Aluminiumoxid sowie Siliciumdioxid, hydrothermal stabilen Metallzeolithen und deren Mischungen, die mit Gold und/oder Palladium imprägniert sind.

11. Verfahren nach Anspruch 10,
**dadurch gekennzeichnet,**
**dass** ein Katalysator mit oxidationsaktiven Beschichtungen, bestehend aus Palladium und/oder Gold als Aktivkomponenten mit einem EdelmetallGehalt von 0,001 bis 2 Gew.-% eingesetzt wird.

12. Verfahren nach einem der Ansprüche 1 bis 11,
**dadurch gekennzeichnet,**
**dass** man einen Katalysator bestehend aus zwei Abschnitten einsetzt, wobei der erste Abschnitt nicht oxidationsaktive Beschichtungen und der zweite Abschnitt oxidationsaktive Beschichtungen enthält, wobei bevorzugt 5 bis 90 Vol.-% des Katalysators aus nicht oxidationsaktiven Beschichtungen und 10 bis 95 Vol.-% aus oxidationsaktiven Beschichtungen besteht.

13. Verfahren nach einem der Ansprüche 1 bis 12,
**dadurch gekennzeichnet,**
**dass** man die katalytische Zersetzung in Gegenwart von zwei hintereinander angeordneten Katalysatoren durchführt, wobei der erste Katalysator aus nicht oxidationsaktiven Beschichtungen und der zweite Katalysator aus oxidationsaktiven Beschichtungen besteht.

14. Verfahren nach einem der Ansprüche 1 bis 13,
**dadurch gekennzeichnet,**
**dass** man die katalytische Zersetzung der Guanidinsalz-Lösungen bei 150 bis 350 °C durchführt.

## Claims

1. Process for the selective catalytic reduction of nitrogen oxides present in exhaust gases of vehicles, **characterised in that** solutions of guanidine salts having an ammonia formation potential of 80 to 850 g/kg are catalytically decomposed, optionally in combination with urea and/or ammonia and/or ammonium salts in the presence of catalytically active, oxidation inactive coatings formed of oxides selected from the group titanium dioxide, aluminium oxide, silicon dioxide and mixtures thereof or/and hydrothermally stable zeolites which are metal exchanged in full or in part, and the resulting ammonia-containing gas is added to the exhaust gas of the vehicle upstream of an SCR catalyst, guanidine salts of the general formula (I) 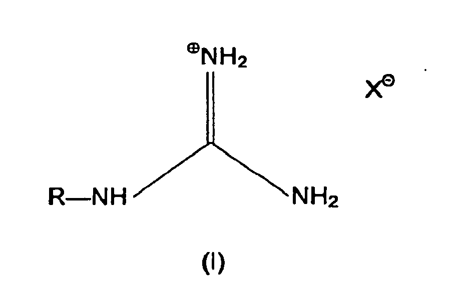 being used, in which
R = H, NH₂, C₁-C₁₂-Alkyl,
X^{Θ} = acetate, cyanate, formate, hydroxide, methylate and oxalate.

2. Process according to claim 1, **characterised in that** a mixture of two or more different guanidine salts is used.

3. Process according to either claim 1 or claim 2, **characterised in that** the guanidine salt has an ammonia formation potential of 250 to 600 g/kg.

4. Process according to any one of claims 1 to 3, **characterised in that** the mixture of guanidine salt and urea has a guanidine salt content of 5 to 60 % by weight and a urea content of 5 to 35 % by weight, or **in that** the mixture of guanidine salt and ammonia and/or ammonium salts has a guanidine salt content of 5 to 60 % by weight and a content of ammonia and/or ammonium salt of 5 to 40 % by weight.

5. Process according to any one of claims 1 to 4, **characterised in that** the ammonium salts are made of compounds with the general formula (II)
R-N H₃^{⊕} X^{Θ} (II)
in which
R = H, NH₂, C₁-C₁₂-Alkyl,
X^{Θ} = acetate, carbonate, cyanate, formate, hydroxide, methylate and oxalate.

6. Process according to any one of claims 1 to 5, **characterised in that** the guanidine salt and optionally the further components are used in a solvent consisting of water and/or a C₁-C₄-alcohol.

7. Process according to claim 6, **characterised in that** the aqueous and/or alcoholic solution comprises a solid content of 5 to 85 % by weight, in particular 30 to 80 % by weight.

8. Process according to any one of claims 1 to 7, **characterised in that** the solution of guanidine salt or the mixture of guanidine salts optionally also mixed with urea in water has an ammonia formation potential of 0.2 to 0.5 kg ammonia per litre of solution, in particular of 0.25 to 0.35 kg/l.

9. Process according to any one of claims 1 to 8, **characterised in that** the guanidine salt and optionally the further components is/are converted to ammonia by catalytic decomposition within exhaust gas in a partial stream or secondary stream of the vehicle exhaust gases or separately from said exhaust gases in an autobaric and extraneously heated arrangement.

10. Process according to any one of claims 1 to 9, **characterised in that** in addition to a catalyst with oxidation inactive coatings, a further catalyst with oxidation active coatings is used for the catalytic decomposition of the guanidine salt and optionally of the further components into ammonia, carbon dioxide and optionally carbon monoxide, said further catalyst preferably having oxidation active coatings formed of oxides selected from the group titanium dioxide, aluminium oxide and silicon dioxide, hydrothermally stable metal zeolites and mixtures thereof which are impregnated with gold and/or palladium.

11. Process according to claim 10, **characterised in that** a catalyst with oxidation active coatings consisting of palladium and/or gold as active components with a noble metal content of 0.001 to 2 % by weight is used.

12. Process according to any of claims 1 to 11, **characterised in that** a catalyst consisting of two portions is used, the first portion containing oxidation inactive coatings and the second portion containing oxidation active coatings, preferably 5 to 90 % by volume of the catalyst consisting of oxidation inactive coatings and 10 to 95 % by volume consisting of oxidation active coatings.

13. Process according to any one of claims 1 to 12, **characterised in that** the catalytic decomposition is carried out in the presence of two catalysts arranged in succession, the first catalyst consisting of oxidation inactive coatings and the second catalyst consisting of oxidation active coatings.

14. Process according to any one of claims 1 to 13, **characterised in that** the catalytic decomposition of the guanidine salt solutions is carried out at 150 to 350 °C.

## Revendications

1. Procédé de réduction catalytique sélective d'oxydes d'azote avec de l'ammoniac dans des gaz d'échappement de véhicules à moteurs, **caractérisé en ce que** l'on décompose catalytiquement des solutions de sels de guanidine ayant un potentiel de formation d'ammoniac de 80 à 850 g/kg, éventuellement combinés à l'urée et/ou à de l'ammoniac et/ou aux sels d'ammonium, en présence de revêtements catalytiquement actifs, n'ayant pas d'action oxydante, constitués d'oxydes choisis dans le groupe constitué par le dioxyde de titane, l'oxyde d'aluminium, le dioxyde de silicium et leurs mélanges et/ou les zéolithes hydrothermiquement stables, qui sont entièrement ou partiellement échangées par des métaux, et le gaz ammoniaqué en résultant est amené au gaz d'échappement du véhicule à moteur en amont d'un catalyseur SCR, où l'on met en oeuvre les sels de guanidine de formule générale (I) 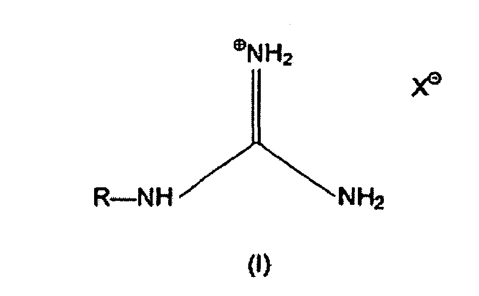 dans laquelle
R = H, NH₂, alkyle en C₁-C₁₂,
X^{Θ} = acétate, cyanate, formiate, hydroxyde, méthylate et oxalate.

2. Procédé selon la revendication 1, **caractérisé en ce qu'**un mélange constitué de deux ou plusieurs sels de guanidine différents est mis en oeuvre.

3. Procédé selon l'une des revendications 1 à 2, **caractérisé en ce que** le sel de guanidine possède un potentiel de formation d'ammoniac de 250 à 600 g/kg.

4. Procédé selon l'une des revendications 1 à 3, **caractérisé en ce que** le mélange de sel de guanidine et d'urée présente une teneur en sels de guanidine de 5 à 60 % en poids et une teneur en urée de 5 à 35 % en poids ou que le mélange du sel de guanidine et d'ammoniac ou de sels d'ammonium présente une teneur en sel de guanidine de 5 à 60 % en poids et d'ammoniac ou de sel d'ammonium de 5 à 40 % en poids.

5. Procédé selon l'une des revendications 1 à 4, **caractérisé en ce que** les sels d'ammonium consistent en les composés de formule générale (II)
R-NH₃^{⊕} X^{Θ} (II)
dans laquelle
R = H, NH₂, alkyle en C₁-C₁₂,
X^{Θ} = acétate, carbonate, cyanate, formiate, hydroxyde, méthylate et oxalate.

6. Procédé selon l'une des revendications 1 à 5, **caractérisé en ce que** le sel de guanidine ainsi que, éventuellement, les autres composants sont mis en oeuvre dans un solvant constitué d'eau et/ou d'un alcool en C₁-C₄.

7. Procédé selon la revendication 6, **caractérisé en ce que** la solution aqueuse et/ou alcoolique présente une teneur en matières solides de 5 à 85 % en poids, en particulier de 30 à 80 % en poids.

8. Procédé selon l'une des revendications 1 à 7, **caractérisé en ce que** la solution de sel de guanidine ou des mélanges de sels de guanidine, éventuellement aussi en mélange avec de l'urée dans de l'eau, possède un potentiel de formation d'ammoniac de 0,2 à 0,5 kg d'ammoniac par litre de solution, en particulier de 0,25 à 0,35 kg/litre.

9. Procédé selon l'une des revendications 1 à 8, **caractérisé en ce que** le sel de guanidine ainsi que, éventuellement, les autres composants sont convertis en ammoniac par décomposition catalytique de manière interne dans les gaz d'échappement dans le courant partiel ou secondaire des gaz d'échappement de véhicule ou de manière externe dans les gaz d'échappement dans un agencement autobare et à chauffage extérieur.

10. Procédé selon l'une des revendications 1 à 9, **caractérisé en ce que** l'on met en oeuvre pour la décomposition catalytique du sel de guanidine, ainsi qu'éventuellement d'autres composants, en ammoniac, dioxyde de carbone et éventuellement monoxyde de carbone, en plus d'un catalyseur comprenant des revêtements n'ayant pas une action oxydante, un autre catalyseur comprenant des revêtements ayant une action oxydante, de préférence un catalyseur comprenant des revêtements ayant une action oxydante composés d'oxydes, choisis dans le groupe constitué par le dioxyde de titane, l'oxyde d'aluminium et le dioxyde de silicium, les zéolithes métalliques hydrothermiquement stables et leurs mélanges, qui sont imprégnés d'or et/ou de palladium.

11. Procédé selon la revendication 10, **caractérisé en ce que** l'on met en oeuvre un catalyseur comprenant des revêtements ayant une action oxydante, composés de palladium et/ou d'or à titre de composants actifs et ayant une teneur en métaux précieux de 0,001 à 2 % en poids.

12. Procédé selon une des revendications 1 à 11, **caractérisé en ce que** l'on met en oeuvre un catalyseur constitué de deux portions, la première portion comprenant des revêtements n'ayant pas une action oxydante et la deuxième portion comprenant des revêtements ayant une action oxydante, de préférence 5 à 90 % en volume du catalyseur étant constitués de revêtements n'ayant pas une action oxydante et 10 à 95 % en volume étant constitués de revêtements ayant une action oxydante.

13. Procédé selon une des revendications 1 à 12, **caractérisé en ce que** l'on réalise la décomposition catalytique en présence de deux catalyseurs disposés l'un derrière l'autre, le premier catalyseur étant constitué de revêtements n'ayant pas une action oxydante et le deuxième catalyseur étant constitué de revêtements ayant une action oxydante.

14. Procédé selon une des revendications 1 à 13, **caractérisé en ce que** l'on réalise la décomposition catalytique des solutions de sel de guanidine à une température allant de 150 à 350°C.
